# EUROPEAN PATENT APPLICATION

(11) **EP 4 811 739 A1**
(43) Date of publication of application: **23.09.2026**
(21) Application number: 23961850.7
(22) Date of filing: 20.12.2023
(51) Int. Cl.: H04L 41/0896, H04W 52/02

(54) **METHOD AND APPARATUS FOR ADJUSTING LINK WIDTH**

(71) Applicant: Huawei Technologies Co., Ltd., Shenzhen, Guangdong 518129 (CN)
(72) Inventor: WU, Dongxing, Shenzhen, Guangdong 518129 (CN); SHI, Xuan, Shenzhen, Guangdong 518129 (CN); LIU, Yan, Shenzhen, Guangdong 518129 (CN); YANG, Bing, Shenzhen, Guangdong 518129 (CN); WU, Kaijie, Shenzhen, Guangdong 518129 (CN); LIU, Xiaojian, Shenzhen, Guangdong 518129 (CN); LI, Yun, Shenzhen, Guangdong 518129 (CN); FENG, Shulan, Shenzhen, Guangdong 518129 (CN)
(74) Representative: Maiwald GmbH
(86) International application number: PCT/CN2023/140388
(87) International publication number: WO 2025/129511

(57) **Abstract**

This application provides a link width adjustment method and apparatus, and relates to the communication field, to implement dynamic link width adjustment. The method includes: sending a link width adjustment message to a second device, where the link width adjustment message includes a link width request parameter; receiving a response message of the second device; and adjusting, based on the response message, a width of a port transmitter link of the first device to a width indicated by the link width request parameter.

## Description

### TECHNICAL FIELD

This application relates to the communication field, and in particular, to a link width adjustment method and apparatus.

### BACKGROUND

With rapid development of communication technologies, service data is transmitted between interconnected devices through a link between the devices. As a rate supported by an interface increases, a wider link bandwidth is required to match the rate, to ensure a transmission rate of service data.

When a service is idle, an excessively wide link bandwidth causes a waste of power. Therefore, the link bandwidth is dynamically managed, so that the link bandwidth matches a transmission requirement of the service data. This saves link power consumption while ensuring the transmission rate of the service data.

### SUMMARY

This application provides a link width adjustment method and apparatus, to implement dynamic link width adjustment.

To achieve the foregoing objectives, the following technical solutions are used in embodiments of this application.

According to a first aspect, a link width adjustment method is provided. The method is performed by a first device or a chip in a first device. The method may include: sending a link width adjustment message to a second device, where the link width adjustment message includes a link width request parameter; receiving a response message of the second device; and adjusting, based on the response message, a width of a port transmitter link of the first device to a width indicated by the link width request parameter.

According to the solution provided in this application, a quantity of lanes used for high-speed data transmission may be dynamically adjusted based on a service status by adjusting a link width. When a service requirement is lowered, some lanes are disabled to reduce power consumption. When a service requirement is increased, lanes are quickly enabled to support high-speed transmission, thereby avoiding service blocking.

In a possible implementation, the link width request parameter indicates a first quantity, and the link width adjustment message further includes a low-power gear. Adjusting the width of the port transmitter link of the first device to the width indicated by the link width request parameter includes: determining a to-be-disabled lane, where the port transmitter link further includes a first quantity of lanes in a high-speed state in addition to the to-be-disabled lane; and entering, by the to-be-disabled lane, a state indicated by the low-power gear. The link width adjustment message is used to reduce a quantity of lanes. The link width adjustment message indicates to enable a part of lanes in the port transmitter link to enter the indicated low-power gear, where data of remaining lanes in the high-speed state is the first quantity. A quantity of link lanes is dynamically reduced.

In another possible implementation, determining the to-be-disabled lane includes: determining, as to-be-disabled lanes from lanes currently in the high-speed state in the port transmitter link, a second quantity of lanes whose lane sequence numbers are in descending order, where the second quantity is obtained by subtracting the first quantity from a quantity of the lanes currently in the high-speed state.

In another possible implementation, determining the to-be-disabled lane includes: determining, as to-be-disabled lanes from lanes currently in the high-speed state in the port transmitter link, a second quantity of lanes whose lane sequence numbers are in ascending order, where the second quantity is obtained by subtracting the first quantity from a quantity of the lanes currently in the high-speed state.

In another possible implementation, determining the to-be-disabled lane includes: randomly selecting a second quantity of lanes as to-be-disabled lanes from lanes currently in the high-speed state in the port transmitter link, where the second quantity is obtained by subtracting the first quantity from a quantity of lanes currently in the high-speed state.

In another possible implementation, before the to-be-disabled lane enters the state indicated by the low-power gear, the method provided in this application may further include: sending, on the to-be-disabled lane, a control frame indicating logical layer electrical idle, to indicate to a peer end that the to-be-disabled lane is idle, so that the peer end determines the to-be-disabled lane.

In another possible implementation, the method provided in this application may further include: sending a pad control frame on the first quantity of lanes in the high-speed state, to implement multi-lane scrambling code resetting at a transmitter side and a receiver side.

In another possible implementation, the method provided in this application may further include: sending a data start control frame on the first quantity of lanes in the high-speed state, to implement multi-lane alignment. The transmitter side and the receiver side transmit data by using an adjusted link bandwidth.

In another possible implementation, the link width request parameter indicates a third quantity. Adjusting the width of the port transmitter link of the first device to the width indicated by the link width request parameter includes: determining a to-be-enabled lane, where the third quantity is a sum of a quantity of lanes currently in a high-speed state in the port transmitter link and a quantity of to-be-enabled lanes; and sending a training sequence on the to-be-enabled lane. The link width adjustment message is used to increase the quantity of lanes. The link width adjustment message indicates to enable a part of lanes in a non-high-speed state in the port transmitter link, so that data of lanes in the high-speed state is the third quantity. A quantity of link lanes is dynamically increased.

In another possible implementation, determining the to-be-enabled lane includes: determining, as to-be-enabled lanes from a lane with a largest lane sequence number in lanes currently in the high-speed state in the port transmitter link, a fourth quantity of lanes whose lane sequence numbers are in ascending order, where the fourth quantity is obtained by subtracting a quantity of the lanes currently in the high-speed state from the third quantity.

In another possible implementation, determining the to-be-enabled lane includes: determining, as to-be-enabled lanes from a lane with a smallest lane sequence number in lanes currently in the high-speed state in the port transmitter link, a fourth quantity of lanes whose lane sequence numbers are in descending order, where the fourth quantity is obtained by subtracting a quantity of the lanes currently in the high-speed state from the third quantity.

In another possible implementation, determining the to-be-enabled lane includes: randomly selecting, as to-be-enabled lanes from lanes currently not in the high-speed state in the port transmitter link, a fourth quantity of lanes, where the fourth quantity is obtained by subtracting a quantity of the lanes currently in the high-speed state from the third quantity.

In another possible implementation, sending the training sequence on the to-be-enabled lane includes: sending the training sequence on the to-be-enabled lane; receiving a lane lock feedback message sent by the second device; and completing training of the to-be-enabled lane through interaction with a peer end, to enable the to-be-enabled lane and increase the link width.

In another possible implementation, sending the training sequence on the to-be-enabled lane may further include: sending a pad control frame on the to-be-enabled lane; sending a pad control frame on a lane in a high-speed state in the port transmitter link; and sending a data start control frame on all lanes in the high-speed state in the port transmitter link. The to-be-enabled lane is enabled and the link width is increased.

In another possible implementation, before sending the training sequence on the to-be-enabled lane, the link width adjustment method provided in this application may further include: sending a link training start message, where the link training start message indicates to initiate training for the to-be-enabled lane. The peer end is indicated, by using the link training start message, to start training of the to-be-enabled lane, to implement synchronization of lane training between a transmitter side and a receiver side.

In another possible implementation, before sending the training sequence on the to-be-enabled lane, the link width adjustment method provided in this application may further include: sending an electrical idle exit frame on the to-be-enabled lane, to wake up the to-be-enabled lane, thereby training the to-be-enabled lane.

According to a second aspect, another link width adjustment method is provided. The method may be applied to a second device or a chip in a second device for execution. The method may include: receiving a link width adjustment message, where the link width adjustment message includes a link width request parameter; and when dynamic link width switching is supported, sending a response message, where the response message is used to confirm that a width of a port receiver link of the second device is adjusted to a width indicated by the link width request parameter.

According to the solution provided in this application, a quantity of lanes used for high-speed data transmission may be dynamically adjusted based on a service status by adjusting a link width. When a service requirement is lowered, some lanes are disabled to reduce power consumption. When a service requirement is increased, lanes are quickly enabled to support high-speed transmission, thereby avoiding service blocking.

In a possible implementation, supporting dynamic link width switching may be: supporting independent link width adjustment of a receiver link and a transmitter link.

In another possible implementation, the second device sends a response message when the receiver link of the second device supports the width indicated by the link width request parameter. In the present invention, a transmitter side initiates a link width adjustment request, and a receiver side responds to the link width adjustment request when a receiver link of the receiver side supports a width indicated by a link width adjustment parameter, so that width adjustment of a transmitter link and that of a receiver link are independent of each other, thereby avoiding interference and impeding and improving link width adjustment flexibility.

In another possible implementation, the link width request parameter indicates a first quantity, and the link width adjustment message further includes a low-power gear. The link width adjustment message is used to reduce a quantity of lanes. The link width adjustment message indicates to enable a part of lanes in the port transmitter link to enter the indicated low-power gear, where data of remaining lanes in the high-speed state is the first quantity. The method provided in this application may further include: determining a to-be-disabled lane, where the port transmitter link further includes a first quantity of lanes in a high-speed state in addition to the to-be-disabled lane; and entering, by the to-be-disabled lane, a state indicated by the low-power gear.

In another possible implementation, the second device determining the to-be-disabled lane may be specifically implemented as follows: receiving a first control frame; and if the first control frame is a logical layer electrical idle control frame, determining that a lane receiving the first control frame is the to-be-disabled lane.

In another possible implementation, the method provided in this application may further include: receiving a second control frame; and if the second control frame is a pad control frame, determining that a lane receiving the second control frame is in a high-speed state, where a quantity of lanes in the high-speed state is the first quantity.

In another possible implementation, the link width request parameter indicates a third quantity. The link width adjustment message is used to increase the quantity of lanes. The link width adjustment message indicates to enable a part of lanes in a non-high-speed state in the port receiver link, so that data of lanes in the high-speed state is the third quantity. The method provided in this application may further include: receiving a training sequence on a to-be-enabled lane. Training of the to-be-enabled lane has been completed, and therefore the lane is enabled.

In another possible implementation, before receiving the training sequence on the to-be-enabled lane, the method provided in this application may further include: determining the to-be-enabled lane, where the to-be-enabled lane is a lane that is sensed to be non-electrical idle. If it is sensed that the to-be-enabled lane is non-electrical idle, it indicates that a peer end is waking up the to-be-enabled lane and further training the to-be-enabled lane.

Sensing that the to-be-enabled lane is non-electrical idle means that an electrical idle exit frame is received on the to-be-enabled lane.

In another possible implementation, before receiving the training sequence on the to-be-enabled lane, the method provided in this application may further include: the method provided in this application may further include: determining the to-be-enabled lane, where the to-be-enabled lane is a lane for which training indicated by the link training start message is initiated. Synchronization of lane training between a transmitter side and a receiver side is implemented by using the link training start message.

In another possible implementation, receiving the training sequence on the to-be-enabled lane further includes: sending a lane lock feedback message to a first device.

In another possible implementation, receiving the training sequence on the to-be-enabled lane further includes: receiving a pad control frame on the to-be-enabled lane; receiving a pad control frame on a lane in a high-speed state in the port receiver link; and receiving a data start control frame on all lanes in the high-speed state in the port receiver link.

According to a third aspect, a link width adjustment apparatus is provided, and is deployed in a first device or a chip in a first device. The apparatus may include a sending unit, a receiving unit, and an adjustment unit. Specifically:

The sending unit is configured to send a link width adjustment message to a second device, where the link width adjustment message includes a link width request parameter.

The receiving unit is configured to receive a response message of the second device.

The adjustment unit is configured to adjust, based on the response message, a width of a port transmitter link of the first device to a width indicated by the link width request parameter.

It should be noted that the link width adjustment apparatus provided in the third aspect is configured to implement the link width adjustment method provided in the first aspect or any possible implementation of the first aspect. For specific implementation of the apparatus, refer to the first aspect or any possible implementation of the first aspect. Details are not described herein again.

According to a fourth aspect, another link width adjustment apparatus is provided, and is used in a second device or a chip in a second device. The apparatus may include a receiving unit and a sending unit. Specifically:

The receiving unit is configured to receive a link width adjustment message, where the link width adjustment message includes a link width request parameter.

The sending unit is configured to: when dynamic link width switching is supported, send a response message, where the response message is used to confirm that a width of a port receiver link of the second device is adjusted to a width indicated by the link width request parameter.

It should be noted that the link width adjustment apparatus provided in the fourth aspect is configured to implement the link width adjustment method provided in the second aspect or any possible implementation of the second aspect. For specific implementation of the apparatus, refer to the second aspect or any possible implementation of the second aspect. Details are not described herein again.

According to a fifth aspect, a compute device is provided. The compute device includes a memory and at least one processor. The memory is configured to store a group of computer instructions. When executing the group of computer instructions, the processor performs operations of the method according to the first aspect, the second aspect, or any one of the possible implementations.

According to a sixth aspect, a chip is provided, including one or more interface circuits and one or more processors. The interface circuit is configured to: receive a signal from a memory of an electronic device, and send the received signal to the processor, where the signal includes computer instructions stored in the memory. When the processor executes the computer instructions, the electronic device is enabled to perform operation steps in the method according to the first aspect, the second aspect, or any one of the possible implementations.

According to a seventh aspect, a computer-readable storage medium is provided, including computer software instructions. When the computer software instructions are run in a computer, the computer is enabled to perform operation steps of the method according to the first aspect, the second aspect, or any one of the possible implementations.

According to an eighth aspect, a computer program product is provided. When the computer program product runs on a computer, the computer is enabled to perform operation steps of the method according to the first aspect, the second aspect, or any one of the possible implementations.

According to a ninth aspect, a data transmission system is provided. The data transmission system includes a data sending apparatus and a data receiving apparatus. The data sending apparatus is the link width adjustment apparatus according to any implementation of the third aspect, and the data receiving apparatus includes the link width adjustment apparatus according to the fourth aspect.

The solutions provided in the third aspect to the ninth aspect are used to implement the method provided in the first aspect or the second aspect, and therefore can achieve same beneficial effects as the first aspect or the second aspect. Details are not described herein again.

It should be noted that all possible implementations of any one of the foregoing aspects may be combined on a premise that there is no conflict between the solutions.

### BRIEF DESCRIPTION OF DRAWINGS

FIG. 1 is a diagram of a structure of a data transmission system according to an embodiment of this application;
FIG. 2 is a diagram of a structure of another data transmission system according to an embodiment of this application;
FIG. 3 is a diagram of basic components of an electronic device according to an embodiment of this application;
FIG. 4 is a diagram of inter-interface transmission according to an embodiment of this application;
FIG. 5 is a diagram of a structure of a compute device according to an embodiment of this application;
FIG. 6 is a schematic flowchart of a link width adjustment method according to an embodiment of this application;
FIG. 7 is a schematic flowchart of another link width adjustment method according to an embodiment of this application;
FIG. 8a is a schematic flowchart of still another link width adjustment method according to an embodiment of this application;
FIG. 8b is a schematic flowchart of still another link width adjustment method according to an embodiment of this application;
FIG. 8c is a schematic flowchart of still another link width adjustment method according to an embodiment of this application;
FIG. 9 is a schematic flowchart of dynamically reducing a quantity of lanes according to an embodiment of this application;
FIG. 10 is a schematic flowchart of dynamically increasing a quantity of lanes according to an embodiment of this application;
FIG. 11 is a diagram of a structure of a link width adjustment apparatus according to an embodiment of this application;
FIG. 12 is a diagram of a structure of another link width adjustment apparatus according to an embodiment of this application; and
FIG. 13 is a diagram of a structure of still another link width adjustment apparatus according to an embodiment of this application.

### DESCRIPTION OF EMBODIMENTS

In embodiments of this application, to clearly describe the technical solutions in embodiments of this application, terms such as "first" and "second" are used to distinguish between same items or similar items that have basically same functions and purposes. A person skilled in the art may understand that the words such as "first" and "second" do not limit a quantity and an execution order, and the words such as "first" and "second" do not indicate a definite difference. There is no sequence or magnitude sequence between technical features described by "first" and "second".

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, at least one may alternatively be described as one or more, and a plurality of may be two, three, four, or more. This is not limited in this application.

The network architecture and the scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

For ease of understanding, the related terms in embodiments of this application are first explained.

Lane (lane): is a path used to transmit signals. The lane may be unidirectional or bidirectional. A unidirectional transmission lane includes a pair of differential signal lines, and a bidirectional transmission lane includes two pairs of differential signal lines.

Link (link): is a collection of lanes or a conductor line used for power supply. The link usually includes one or more lanes. When a lane works, a transmitter and a receiver are enabled at two ends, and data (or referred to as a signal) is transmitted only from the transmitter to the receiver. For a link, a side on which a transmitter is located is referred to as a transmit end or a transmitter side (transmitter side, Tx side), and a side on which a receiver is located is referred to as a receive end or a receiver side (receiver side, Rx side). A link used by a device to send data to a peer end is referred to as a port transmitter link of the device. A link used by the device to receive data from the peer end is referred to as a port receiver link of the device.

A link width means a quantity of lanes in a high-speed state (a state in which service data transmission is supported) in the link, and may also be referred to as a link bandwidth.

Main link (main Link): is used to transmit high-speed data, for example, transmit high-speed data such as audio and video signals and third-party protocol data.

Sideband link (sideband link, SL): is used to transmit low-speed data, for example, transmit low-speed data such as a device management signal, a port management signal, a bandwidth management signal, and a power supply management signal, and is further used to transmit a control packet. Reliability of data transmission on the sideband link is higher than reliability of data transmission on the main link.

Logical layer control frame (Logical Layer Control Frame, LLCF): is a special code pattern used to implement link management functions such as link training and status update.

Logical block (Logical Layer Block, LLB): is a basic unit for data transmission.

For example, as shown in Table 1 and Table 2, a frame format of the LLCF includes a frame header, the frame header includes a frame type and a check, the frame type indicates a type of frame, and the check is a check bit for the frame type. Optionally, the frame format of the LLCF may further include a payload, and the payload is information carried in a control frame of a corresponding type. The LLCF may include one or more frame headers. A frame type and a check in each frame header each may occupy one byte (byte, B), that is, both a length of the frame type and a length of the check may be 1B. The payload in the LLCF may occupy one or more bytes, that is, a length of the payload is lengthened. For example, the LLCF includes a plurality of frame headers and a payload. A frame header 1 occupies bytes B0 and B1, a frame header 2 occupies bytes B2 and B3, a frame header 3 occupies bytes B4 and B5, and the payload occupies a byte B6. The frame header 1, the frame header 2, and the frame header 3 in the foregoing frame structure have same content, to form repetition code.

**Table 1**

| B0 | B1 | B2 | B3 | B4 | B5 | B6 ... (optional) |
|---|---|---|---|---|---|---|
| Frame type | Check | Frame type | Check | Frame type | Check | Payload (optional) |
| Frame header 1 | | Frame header 2 | | Frame header 3 | | Payload (optional) |

**Table 2**

| Field | Note |
|---|---|
| Frame type | Indicate the frame type, where a length is 1 B |
| Check | Check bit for the frame type, where a length is 1 B |
| Payload | Information carried in a control frame of a corresponding type, where a length is lengthened |

A frame type, a check, a payload length, and a description of the control frame in this application may be shown in Table 3, and may include:
a logical layer training sequence 0 (Logical Layer Control Frame Training Sequence 0, LLCF_TS0), used for clock locking in a training phase;
a logical layer training sequence 1 (Logical Layer Control Frame Training Sequence 1, LLCF_TS1), used for channel parameter optimization calculation in the training phase;
a logical layer training sequence 2 (Logical Layer Control Frame Training Sequence 2, LLCF_TS2), used to confirm a synchronization status between a transmitter side and a receiver side;
logical layer electrical idle (Logical Layer Control Frame Electrical Idle, LLCF_EI), used to mark a transmission end on a lane, where data should be discarded after the transmission ends;
logical layer data start (Logical Layer Control Frame Data Start, LLCF_DS), marking a start location of a new logical block, where logical block data is transmitted just after the LLCF_DS;
logical layer electrical idle exit (Logical Layer Control Frame Electrical Idle Exit, LLCF_EIE), used by a transmitter side to wake up a lane through a high-speed link line; and
a pad logical layer control frame (Pad Logical Layer Control Frame, LLCF_PAD), used for padding.

**Table 3**

| Control frame | Frame type | Check | Payload length | Note |
|---|---|---|---|---|
| LLCF_TS0 | -- | -- | Lengthened | Clock locking sequence, where a payload is a sequence 01 |
| LLCF_TS1 | -- | -- | Lengthened | Training sequence with a payload of PRBS11 |
| LLCF_TS2 | 0x6C | 0x56 | 8B | A payload is a PRBS11 sequence, used to confirm synchronization between a transmitter side and a receiver side |
| LLCF_EI | 0x65 | 0x69 | 0 | Mark an end of frame data |
| LLCF_DS | 0x4B | 0xA3 | 0 | Mark a start of new LLB transmission |
| LLCF_EIE | -- | -- | Lengthened | Used for electrical idle wakeup |
| LLCF_PAD | 0xD2 | 0x65 | Lengthened | Used only for padding, and directly discarded after |
| | | | | being received |

The technical solutions provided in this application may be applied to a data transmission system including a plurality of data transmission apparatuses. The data transmission apparatus may be a device, a chip used in the device, an interface apparatus, or the like. In the data transmission system, a data transmission apparatus (for example, a data sending apparatus) and a data transmission apparatus (for example, a data receiving apparatus) may be directly connected, or may be indirectly connected through a switching apparatus such as a router. In other words, the plurality of data transmission apparatuses may all be connected to the switching apparatus. In this application, the plurality of data transmission apparatuses may perform data transmission in a wired manner, or may perform data transmission in a wireless manner. In addition, when the plurality of data transmission apparatuses perform data transmission, signal transmission may be directly performed, or signal transmission may be performed by using an interface apparatus.

When the data transmission apparatus is a chip in a device, chips in the data transmission system may be interconnected in a wired or wireless manner. The chip may be a chip in the device, a chip in a docking station, a chip in an adapter, or the like. A gigabit Ethernet port, a video graphics array (video graphics array, VGA), an HDMI, a flash memory (trans flash, TF) card, a secure digital card (secure digital, SD), a charging interface, a USB interface, and the like may be inserted into the docking station.

Optionally, when the data transmission apparatus is a chip, the chip may further include an interface module. In other words, this application may be applied to interface modules for interconnecting chips. The interface module may be understood as an intellectual property (intellectual property, IP) module integrated in the chip. Alternatively, the interface module may be sold as an independent IP module. For example, the chip may be a system on a chip (system on a chip, SoC), a central processing unit (central processing unit, CPU), or a graphics processing unit (graphics processing unit, GPU). The interface module may be an interface module in an SoC, a CPU, a GPU, or the like. Optionally, the interface module may be a transmitter circuit and/or a receiver circuit.

The following uses an example in which the data transmission system includes a plurality of devices to describe a structure of the data transmission device.

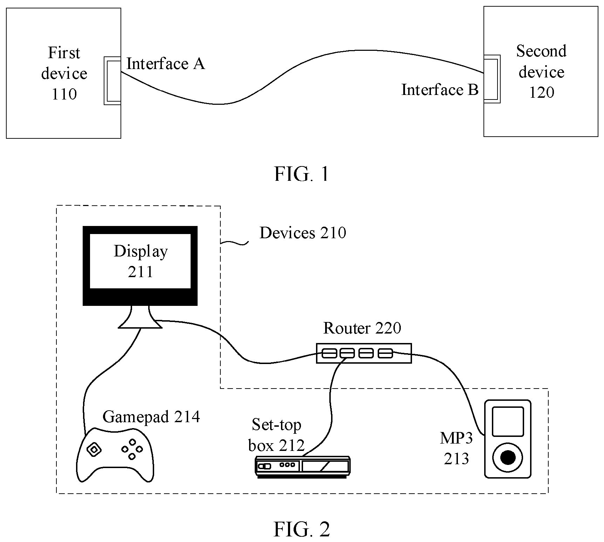

FIG. 1 is a diagram of a structure of a data transmission system according to an embodiment of this application. The data transmission system includes a first device 110 and a second device 120. The first device 110 and the second device 120 are connected in a wired or wireless manner, for example, through a cable. Signal transmission may be performed between the first device 110 and the second device 120, for example, transmission of audio and video data or transmission of a charging signal. In an example, the first device 110 may be a set-top box, and the second device 120 may be a television. The set-top box and the television may be connected through a cable, and the set-top box may transmit audio and video data to the television through the cable. In another example, the first device 110 is a display, and the second device 120 is a gamepad. The display and the gamepad may be connected through a cable. The gamepad may transmit control information to the display through the cable.

Optionally, the first device 110 may include an interface A, and the second device may include an interface B. The first device 110 being connected to the second device 120 may be specifically that the interface A of the first device 110 is connected to the interface B of the second device 120. For example, the interface A of the first device 110 is connected to the interface B of the second device 120 through a cable.

FIG. 2 is a diagram of a structure of another data transmission system according to an embodiment of this application. The data transmission system includes a plurality of devices 210 and a router 220. The plurality of devices 210 may be connected to the router 220 in a wired or wireless manner. For example, all the plurality of devices 210 may be connected to the router 220 through a cable. Signal transmission may be performed between any two of the plurality of devices 210 through the router 220, for example, transmission of audio and video data or transmission of a charging signal. In an example, the plurality of devices 210 may include a display 211, a set-top box 212, and an audio player (for example, an MP3 (Moving Picture Experts Group Audio Layer-3)) 213. The set-top box 212 may transmit audio and video data to the display 211 through the router 220, and the set-top box 212 may further transmit audio data to the audio player 213 through the router 220. In addition, the plurality of devices 210 may include two devices connected to each other. For example, the plurality of devices 210 may further include a gamepad 214, and the gamepad 214 may be connected to the display 211 and transmit control information to the display 211.

Optionally, each of the plurality of devices 210 may include an interface, the router 220 may include a plurality of interfaces, and an interface of each of the plurality of devices 210 may be connected to one of a plurality of interfaces of the router 220. For example, the plurality of devices 210 include a display, a set-top box, a gamepad, and an audio player. The plurality of interfaces of the router 220 include a first interface to a fourth interface. An interface of the display is connected to the first interface of the router 220 through a cable. An interface of the set-top box is connected to the second interface of the router 220 through a cable. An interface of the gamepad is connected to the third interface of the router 220 through a cable. An interface of the audio player is connected to the fourth interface of the router 220 through a cable.

A device in the foregoing system having a data transmission function may be referred to as a communication device. The communication device may be deployed on land, including an indoor or outdoor device, or a handheld or vehicle-mounted device. Alternatively, the communication device may be deployed on a water surface (for example, a ship), or may be deployed in the air (for example, on an airplane, a balloon, or a satellite). The communication device may be used in different scenarios. For example, the communication device may include but is not limited to: a mobile phone (mobile phone), a tablet computer, a notebook computer, a palmtop computer, a mobile internet device (mobile internet device, MID), a camera, a wearable device (such as a smart watch, a smart band, or a pedometer), an audio device, an audio and video player, a set-top box, a game console, a printer, a mouse, a keyboard, a vehicle-mounted device (such as a device on a vehicle, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (such as a refrigerator, a television, an air conditioner, and an electric meter), a smart robot, a workshop device, a wireless terminal in self-driving (self-driving), a wireless terminal in remote medical surgery (remote medical surgery), a wireless terminal in a smart grid (smart grid), a wireless terminal in transportation security (transportation safety), a wireless terminal in a smart city (smart city), a wireless terminal in a smart home (smart home), a flight device (for example, an intelligent robot, a hot air balloon, an unmanned aerial vehicle, or an airplane). Optionally, a signal transmitted between the communication devices may include but is not limited to an audio/video signal, a radio frequency signal, internet of things data, a charging signal, and the like.

In this application, an interface specification used for signal transmission between devices in the data transmission system may include but is not limited to a universal serial bus (universal serial bus, USB) interface specification, a high-definition multimedia interface (high definition multimedia interface, HDMI) specification, a display port (display port, DP) specification, a unified multimedia interconnection (unified multimedia interconnection, UMI) interface specification, a peripheral component interconnect express (peripheral component interconnect express, PCI-Express) interface specification, and the like. Correspondingly, the interface may be an HDMI, a mini HDMI, a micro HDMI, a type-A (type-A) interface, a type-B (type-B) interface, a micro-B interface, a type-C (type-C) interface, or the like.

For example, in the foregoing example, an interface connection manner between the set-top box and the television or an interface connection manner between the game console and the display may be connection through a USB cable, and a complied interface standard is a USB interface specification; or the connection manner may be connection through an HDMI cable, and a complied interface standard is an HDMI interface specification.

It may be understood that the interface specification used for signal transmission between devices is merely an example. In actual application, the interface specification may further include any other or future interface specification, for example, a unified media interconnection (unified media interconnection, UMI) interface. This is not specifically limited in embodiments of this application.

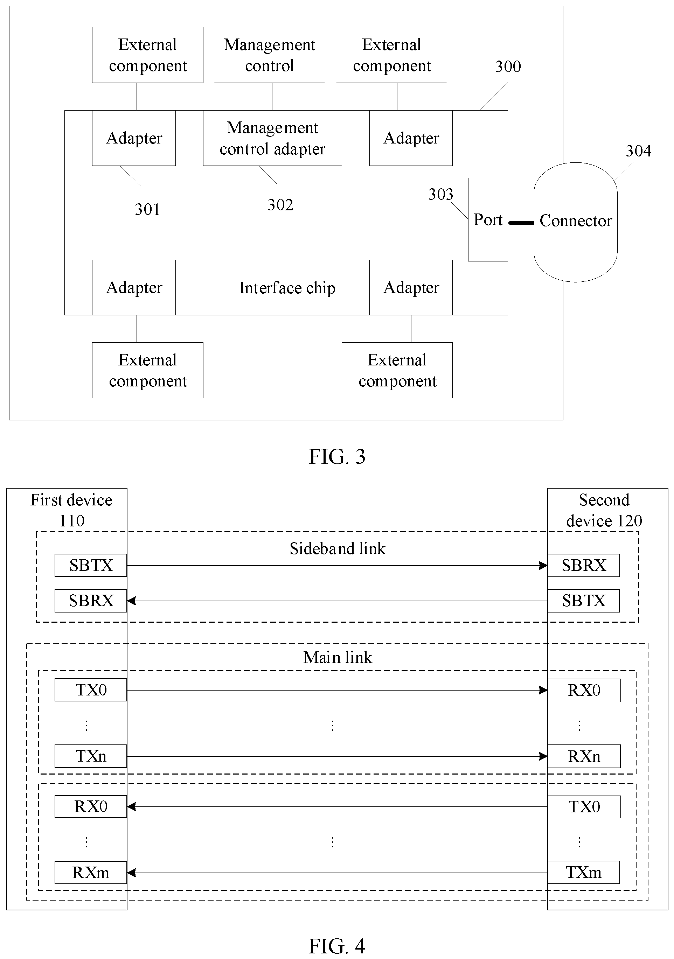

In this application, when the device is an electronic device, FIG. 3 is a diagram of basic components of the electronic device. The electronic device includes an interface chip 300 (a unified multimedia interconnection interface). The interface chip 300 includes one or more adapters 301, a management control adapter 302, and one or more ports 303. Alternatively, when the electronic device is a routing device, the interface chip 300 includes only one or more ports 303. Each adapter 301 in the one or more adapters 301 may be coupled to an external component of the interface chip 300. The management control adapter 302 may be coupled to a component other than the interface chip 300 for management and control. The port 303 may be coupled to a connector 304 of the electronic device. The connector 304 is configured to couple to an external device of the electronic device. The one or more adapters 301 may be sending/receiving adapters. For example, when the adapter 301 is configured to perform audio/video format adaptation, the adapter 301 may be an audio/video sending/receiving adapter. When the adapter 301 is configured to perform third-party protocol adaptation, the adapter 301 may be a third-party protocol adapter.

For example, when the port 303 is a downstream port, the sending adapter may be configured to adapt to-be-sent service information for service information that can be transmitted on the port 303 of the interface chip, and send the service information to the outside through the port 303. When the port 303 is an upstream port, the receiving adapter 301 may be configured to adapt service information received from the port 303 for service information internally processed by the electronic device for internal processing. The management control adapter 302 may be configured to adapt control information.

Basic components of different electronic devices may be combined to form a plurality of different device types. For example, the electronic device is a source device that includes at least one downlink port and at least one audio/video sending adapter, or a source device that includes at least one uplink port and one audio/video receiving adapter, or a docking station device that includes at least one uplink port, at least one audio/video receiving adapter, and at least one conventional audio/video interface, or a routing device that includes at least one downlink port and at least one uplink port but has no audio/video sending adapter and no audio/video receiving adapter, or a composite device that has both an uplink port and a downlink port.

FIG. 4 is a diagram of inter-interface transmission according to an embodiment of this application. A main link and a sideband link may be included between an upstream port and a downstream port of devices. The main link may be used for a high-speed data transmission, for example, an audio and video signal transmission. The sideband link may be mainly used for device management and control, such as device discovery, capability query, device configuration, and device control, and may also be used for a low-speed data transmission and a control packet transmission.

In a possible embodiment, the main link may include a plurality of lanes, and each lane may support unidirectional transmission. The sideband link may include two unidirectional lanes in different directions. In some other possible embodiments, the main link may include a plurality of lanes. A part of lanes in the plurality of lanes are a unidirectional lane, and the other part is a bidirectional lane. The sideband link may include one bidirectional lane. For example, one main link may include a plurality of lanes. For example, a quantity of the plurality of lanes may be 2, 5, or 9. A larger quantity of lanes included in the main link indicates a higher corresponding data transmission speed. For example, as shown in FIG. 4, for the upstream port, the main link may include n transmitter lanes TX0-TXn and m receiver lanes RX0-RXm, and the sideband link includes a transmitter lane SBTX and a receiver lane SBRX, where n and m are positive integers; and for the downstream port, the main link may include n receiver lanes RX0-RXn and m transmitter lanes TX0-TXm, and the sideband link includes a receiver lane SBRX and a transmitter lane SBTX.

Further, a power bus link (power-bus link, PL) and a cable information link (cable-information link, CL) may be further included between an upstream port and a downstream port of devices. The cable information link may be used to transmit cable information such as a cable model and cable capability information. The power bus link and the cable information link are not shown in the figure.

It may be understood that, for a port between devices, regardless of whether the port is an upstream port or a downstream port, the port may include a plurality of pins, for example, include a pin connected to a ground cable, a pin connected to a power cable, a pin connected to a lane of a main link, and a pin connected to a lane of a sideband link.

In a high-speed interconnect interface, the main link may also be referred to as a high-speed link, and may specifically include a plurality of lanes that support high-speed data transmission. For example, a transmission rate supported by a lane of the main link may be 2 Gbps, 4 Gbps, or 8 Gbps. The sideband link may also be referred to as a low-speed link, and may specifically include a plurality of lanes that support low-speed transmission. For example, a transmission rate supported by a lane of the sideband link may be 12.5 Mbps.

During multi-lane data transmission, even if data is sent from a transmitter side by using a same clock source, if processing is not performed on a receiver side, it cannot be ensured that data of all lanes can arrive at the receiver side at the same time and a time difference exists between the lanes. There are many reasons for a lane transmission time difference, for example, different lengths of lane signal lines, different impedance of a circuit board during printing, a delay caused by data serialization and deserialization, and an external factor such as impact due to a temperature.

The following describes the solutions provided in embodiments of this application in detail with reference to accompanying drawings.

In one aspect, an embodiment of this application provides a diagram of a structure of a compute device 50. The compute device 50 may implement functions of the first device 110 or the second device 120 shown in FIG. 1.

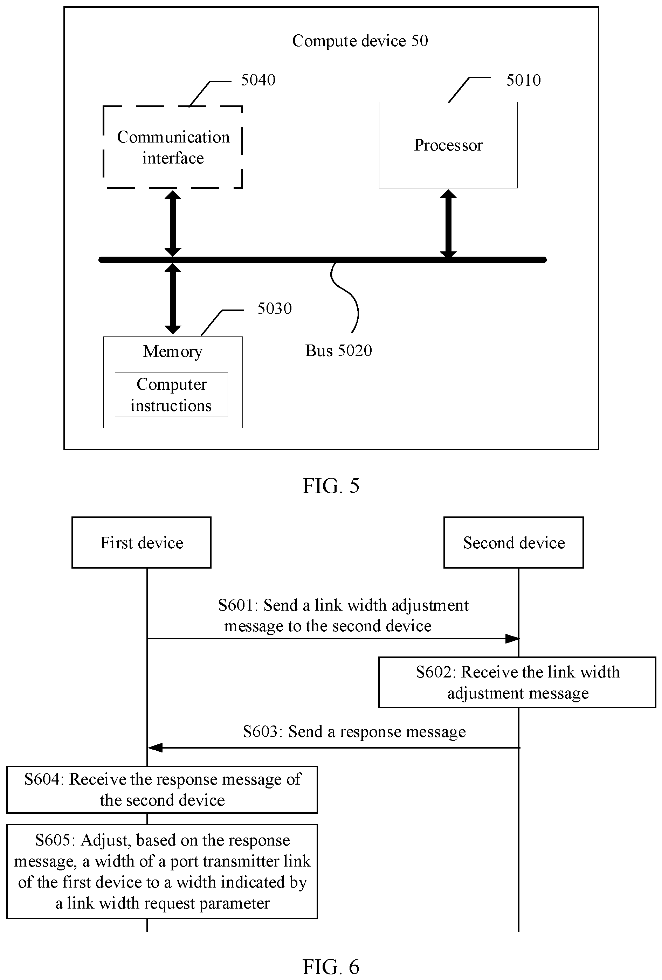

As shown in FIG. 5, the compute device 50 may include a processor 5010, a bus 5020, a memory 5030, and a communication interface 5040. The processor 5010, the memory 5030, and the communication interface 5040 are connected through the bus 5020.

It should be understood that, in this embodiment, the processor 5010 may be a central processing unit (central processing unit, CPU), or the processor 5010 may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like.

Alternatively, the processor 5010 may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 5040 is configured to implement communication between the compute device 50 and an external device or component.

The bus 5020 may include a path for transmitting information between the foregoing components (for example, the processor 5010 and the memory 5030). In addition to a data bus, the bus 5020 may further include a power bus, a control bus, a status signal bus, and the like. However, for clear description, various types of buses in the figures are marked as the bus 5020. The bus 5020 may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses 5020 may be classified into an address bus, a data bus, a control bus, and the like.

In an example, the compute device 50 may include a plurality of processors. The processor may be a multi-core (multi-CPU) processor. The processor herein may be one or more devices, circuits, and/or compute units configured to process data (for example, computer program instructions).

It should be noted that, in FIG. 5, only an example in which the compute device 50 includes one processor 5010 and one memory 5030 is used. Herein, the processor 5010 and the memory 5030 each indicate a type of component or device. In a specific embodiment, a quantity of components or devices of each type may be determined based on a service requirement.

The memory 5030 may be a volatile memory pool or a non-volatile memory pool, or may include both volatile and non-volatile memories. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

For example, the processor 5010 may implement the following functions by running or executing a software program and/or a module stored in the memory 5030:
sending a link width adjustment message to a second device, where the link width adjustment message includes a link width request parameter; receiving a response message of the second device; and adjusting, based on the response message, a width of a port transmitter link of the first device to a width indicated by the link width request parameter.

For example, the processor 5010 may implement the following functions by running or executing a software program and/or a module stored in the memory 5030:
receiving a link width adjustment message, where the link width adjustment message includes a link width request parameter; and when dynamic link width switching is supported, sending a response message, where the response message is used to confirm that a width of a port receiver link of the second device is adjusted to a width indicated by the link width request parameter.

In another aspect, an embodiment of this application provides a link width adjustment method. The method may be applied to a data transmission system including a first device and a second device. For example, the method may be applied to the data transmission system shown in FIG. 1.

Specifically, the link width adjustment method is used to dynamically adjust a width (that is, a quantity of included lanes) of a transmitter link (that is, a receiver link for receiving data by the second device from the first device) from the first device to the second device. The transmitter side negotiates with a peer end to adjust a width of a port transmitter link.

Further, link width adjustment described in this application is adjusting a width of a main link (ML) between devices.

As shown in FIG. 6, a link width adjustment method provided in this application may include the following steps.

S601: A first device sends a link width adjustment message to a second device, where the link width adjustment message includes a link width request parameter.

The link width adjustment message (Link Width Adjust Message, LWAM) may be a set of link width adjustment request parameters. The LWAM is used when a link is in a service transmission state (high-speed state). The LWAM is initiated when a link bandwidth requirement needs to be adjusted.

Specifically, the link width request parameter may indicate a quantity of lanes included in an adjusted link width.

In a possible implementation, in a scenario of dynamically reducing the quantity of lanes, the link width request parameter indicates a first quantity, and the link width adjustment message further includes a low-power gear. The link width adjustment message is used to reduce the quantity of lanes. The link width adjustment message indicates to enable a part of lanes in a port transmitter link to enter the indicated low-power gear, where data of remaining lanes in the high-speed state is the first quantity.

For example, the low-power gear may include a plurality of different gears. For example, according to wakeup times and energy consumption, there are four gears: four states of LP0, LP1, LP2, LP3, and disable. More functional modules are disabled to implement lower energy consumption, and correspondingly, a longer time is taken for waking up from a low-power gear. Wakeup from LP0-LP2 can be implemented by using LLCF_EIE, but wakeup from the LP3 state and the disable state cannot be implemented by using LLCF_EIE. During specific implementation, one or more of the foregoing four states may be supported. This is not limited in the present invention.

For example, the link width request parameter included in the link width adjustment message may be the first quantity. The first quantity is at least 1. A maximum value of the first quantity is related to a maximum transmission rate on a main link. For example, the maximum value may be set to 8, or the maximum value may be set to 16. This is not limited in the present invention.

For example, the link width request parameter included in the link width adjustment message may be a sequence number of a to-be-disabled lane, and the first quantity is a quantity of lanes other than the to-be-disabled lane in lanes currently in the high-speed state. The first quantity is at least 1. A maximum value of the first quantity is related to a maximum transmission rate on a main link. For example, the maximum value may be set to 8, or the maximum value may be set to 16. This is not limited in the present invention.

In another possible implementation, in a scenario of dynamically increasing the quantity of lanes, the link width request parameter indicates a third quantity. The link width adjustment message is used to increase the quantity of lanes. The link width adjustment message indicates to enable a part of lanes in a non-high-speed state in the port transmitter link, so that data of lanes in the high-speed state is the third quantity.

For example, the link width request parameter included in the link width adjustment message may be the third quantity. A maximum value of the third quantity is related to a maximum transmission rate on a main link. For example, the maximum value may be set to 8, or the maximum value may be set to 16. This is not limited in the present invention.

For example, the link width request parameter included in the link width adjustment message may be a sequence number of a to-be-enabled lane, and the third quantity is a sum of a quantity of lanes currently in the high-speed state and a quantity of to-be-enabled lanes. A maximum value of the third quantity is related to a maximum transmission rate on a main link. For example, the maximum value may be set to 8, or the maximum value may be set to 16. This is not limited in the present invention.

It should be noted that an arrangement of the link width request parameter in the link width adjustment message may be configured according to an actual requirement. This is not limited in this embodiment of this application. The LWAM may support transmission through an ML and an SL.

In a possible implementation, the quantity of lanes that is indicated by the link width request parameter may be indicated by an upper layer (for example, a transport layer or an adaptation layer) of a logical layer. This is not limited in this embodiment of this application.

In a possible implementation, the sequence number, indicated by the link width request parameter, of the to-be-disabled lane or the sequence number, indicated by the link width request parameter, of the to-be-enabled lane may be indicated by an upper layer (for example, a transport layer or an adaptation layer) of a logical layer. This is not limited in this embodiment of this application.

For example, based on a transmission requirement of service data, the first device may determine a link bandwidth, that is, a value of the first quantity or the third quantity. A specific implementation method is: Link width=ceiling(R1/R2), where ceiling() represents ceiling, R1 represents a required transmission rate of service data, R2 represents a transmission rate on each lane, and a value of R2 may be 2 Gbps, 4 Gbps, 8 Gbps, or the like. For example, if the required transmission rate of the service data at the beginning is 32 Gbps, and the transmission rate on the lane is 4 Gbps, the link width is 8. If the transmission requirement of the service data is lowered after a period of time, for example, reduced to 2 Gbps, the first device may set the first quantity to 1, and adjust the link width from 8 to 1 to reduce link power consumption; and if the transmission requirement of the service data is increased back to 16 Gbps later, the first device may set the third quantity to 4, and adjust the link width from 1 to 4 to meet the service requirement.

In the present invention, the value of the first quantity or the third quantity may be determined according to the transmission requirement of the service data, so that the link width matches the transmission requirement of the service data, to reduce link power consumption while ensuring the transmission rate of the service data.

S602: The second device receives the link width adjustment message.

The link width adjustment message received by the second device in S602 is the link width adjustment message sent by the first device in S601. Details are not described herein again.

S603: The second device sends a response message when dynamic link width switching is supported.

Specifically, after the second device receives the link width adjustment message, if the second device accepts the link width adjustment request, the second device responds with ACK to the LWAM. Otherwise, the second device responds with NACK.

A response message (that is, ACK) is used to confirm that a width of a port receiver link of the second device is adjusted to the width indicated by the link width request parameter.

In a possible implementation, supporting dynamic link width switching may be: supporting independent link width adjustment of a receiver link and a transmitter link.

In another possible implementation, supporting dynamic link width switching may be that the second device sends a response message when the receiver link of the second device supports the width indicated by the link width request parameter. In this application, a transmitter side initiates a link width adjustment request, and a receiver side responds to the link width adjustment request when a receiver link of the receiver side supports a width indicated by the link width adjustment message, so that width adjustment of a transmitter link and that of a receiver link are independent of each other, thereby avoiding interference and impeding and improving link width adjustment flexibility.

In another possible implementation, supporting dynamic link width switching may be: supporting independent link width adjustment of a receiver link and a transmitter link, and supporting, by the receiver link, the width indicated by the link width request parameter.

It should be noted that a format and a content arrangement of the corresponding response message are not limited in this embodiment of this application.

S604: The first device receives the response message of the second device.

The response message received by the first device in S604 is the response message sent by the second device in S603. Details are not described herein again.

S605: The first device adjusts, based on the response message, a width of a port transmitter link of the first device to the width indicated by the link width request parameter.

Specifically, if the first device receives the response message sent by the second device, it indicates that the second device accepts the link width adjustment request, and the first device may start to execute a link width adjustment process.

Specifically, specific implementation of S605 may be separately described in the scenario of dynamically reducing the quantity of lanes and the scenario of dynamically increasing the quantity of lanes below.

### (1) Scenario of dynamically reducing the quantity of lanes:

In the scenario of dynamically reducing the quantity of lanes, the link width request parameter indicates the first quantity, and the first quantity is less than a quantity of lanes currently in the high-speed state in the port transmitter link of the first device. In addition, the link width adjustment message further includes the low-power gear. In this scenario, the part of lanes (to-be-disabled lane) currently in the high-speed state in the port transmitter link of the first device is disabled (entering the low-power state), so that the quantity of lanes in the high-speed state in the port transmitter link of the first device is the first quantity.

Specifically, S605 may be specifically implemented as follows: determining a to-be-disabled lane, where the port transmitter link further includes a first quantity of lanes in the high-speed state in addition to the to-be-disabled lane; and entering, by the to-be-disabled lane, the state indicated by the low-power gear.

A process of controlling a lane to enter the low-power state is not limited in this embodiment of this application.

Further, the to-be-disabled lane may be a second quantity of lanes in the high-speed state in the lanes currently in the high-speed state in the port transmitter link. The second quantity is obtained by subtracting the first quantity from the quantity of the lanes currently in the high-speed state.

In a possible implementation, determining the to-be-disabled lane includes: determining, as to-be-disabled lanes from the lanes currently in the high-speed state in the port transmitter link of the first device, a second quantity of lanes whose lane sequence numbers are in descending order.

The lane sequence number is a parameter configured for a lane. Different lanes have different lane sequence numbers. A form of the lane sequence number is not limited in this embodiment of this application.

For example, it is assumed that a link includes eight lanes, lane sequence numbers are sequentially 00 to 08, lanes currently in the high-speed state are 00 to 04, there are five lanes in total, and the first quantity is 3. In this case, it may be determined that the lanes 04 and 03 are used as to-be-disabled lanes.

In another possible implementation, determining the to-be-disabled lane includes: determining, as to-be-disabled lanes from the lanes currently in the high-speed state in the port transmitter link of the first device, a second quantity of lanes whose lane sequence numbers are in ascending order.

For example, it is assumed that a link includes eight lanes, lane sequence numbers are sequentially 00 to 08, lanes currently in the high-speed state are 00 to 04, there are five lanes in total, and the first quantity is 3. In this case, it may be determined that the lanes 00 and 01 are used as to-be-disabled lanes.

In another possible implementation, determining the to-be-disabled lane includes: randomly selecting a second quantity of lanes as to-be-disabled lanes from lanes currently in the high-speed state in the port transmitter link.

In still another possible implementation, determining the to-be-disabled lane includes: receiving a sequence number that is of a to-be-disabled lane and that is indicated by an upper layer (for example, a transport layer or an adaptation layer) of a logical layer, and determining, as the to-be-disabled lane, a lane indicated by the sequence number. This is not limited in this embodiment of this application.

### (2) Scenario of dynamically increasing the quantity of lanes:

In the scenario of dynamically increasing the quantity of lanes, the link width request parameter indicates a third quantity, and the third quantity is greater than a quantity of lanes currently in the high-speed state in the port transmitter link of the first device. In this scenario, a part of lanes in the non-high-speed state in the port transmitter link of the first device is enabled (woken up), so that data of lanes in the high-speed state is the third quantity.

Specifically, S605 may be specifically implemented as follows: determining the to-be-enabled lane, where the third quantity is a sum of the quantity of lanes currently in the high-speed state in the port transmitter link and a quantity of to-be-enabled lanes; and sending a training sequence on the to-be-enabled lane.

A process of enabling (waking up) a lane is not limited in this embodiment of this application.

Further, the to-be-enabled lane may be a fourth quantity of lanes in the lanes currently in the non-high-speed state in the port transmitter link, where the fourth quantity is obtained by subtracting the quantity of the lanes currently in the high-speed state from the third quantity.

In a possible implementation, determining the to-be-enabled lane includes: determining, as to-be-enabled lanes from a lane with a largest lane sequence number in the lanes currently in the high-speed state in the port transmitter link, the fourth quantity of lanes whose lane sequence numbers are in ascending order.

For example, it is assumed that a link includes eight lanes, lane sequence numbers are sequentially 00 to 08, lanes currently in the high-speed state are 00 to 04, there are five lanes in total, and the third quantity is 7. In this case, it may be determined that the lanes 05 and 06 are used as to-be-enabled lanes.

In another possible implementation, determining the to-be-enabled lane includes: determining, as to-be-enabled lanes from a lane with a smallest lane sequence number in the lanes currently in the high-speed state in the port transmitter link, the fourth quantity of lanes whose lane sequence numbers are in descending order.

For example, it is assumed that a link includes eight lanes, lane sequence numbers are sequentially 00 to 08, lanes currently in the high-speed state are 03 to 07, there are five lanes in total, and the third quantity is 7. In this case, it may be determined that the lanes 01 and 02 are used as to-be-enabled lanes.

In another possible implementation, determining the to-be-enabled lane includes: randomly selecting the fourth quantity of lanes as to-be-enabled lanes from the lanes currently not in the high-speed state in the port transmitter link.

In still another possible implementation, determining the to-be-enabled lane includes: receiving a sequence number that is of a to-be-enabled lane and that is indicated by an upper layer (for example, a transport layer or an adaptation layer) of a logical layer, and determining, as the to-be-enabled lane, a lane indicated by the sequence number. This is not limited in this embodiment of this application.

According to the solution provided in this embodiment of this application, a quantity of lanes used for high-speed data transmission may be dynamically adjusted based on a service status by adjusting a link width. When a service requirement is lowered, some lanes are disabled to reduce power consumption. When a service requirement is increased, lanes are quickly enabled to support high-speed transmission, thereby avoiding service blocking.

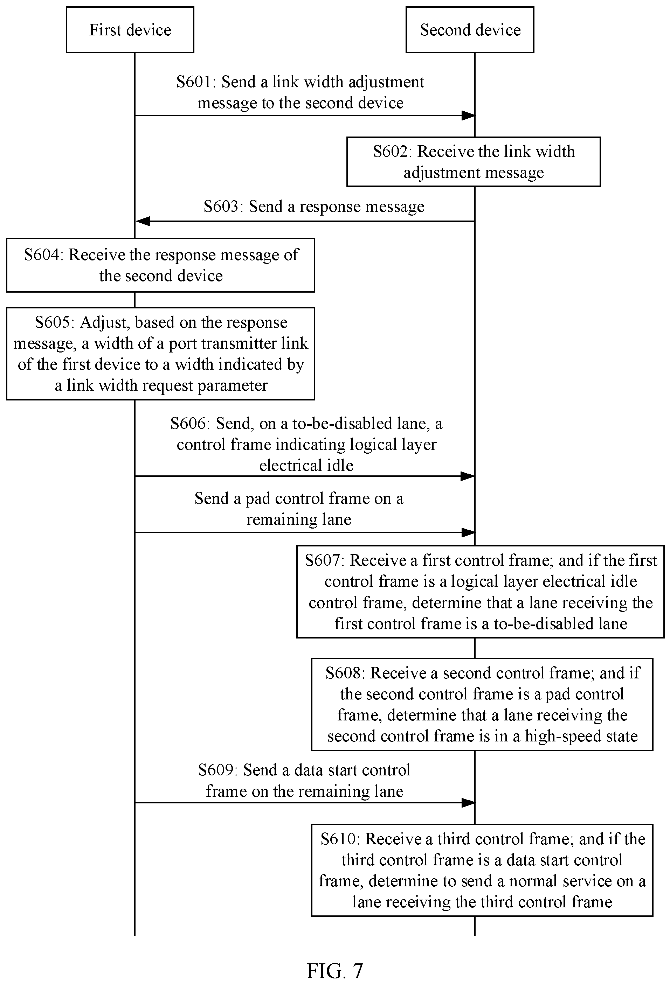

Further, in the scenario of dynamically reducing the quantity of lanes, as shown in FIG. 7, before the to-be-disabled lane enters the state indicated by the low-power gear, the method provided in this embodiment of this application may further include S606.

S606: The first device sends, on the to-be-disabled lane, a control frame indicating logical layer electrical idle.

Further, when S606 is performed, or after S606 is performed, the first device sends a pad control frame on a remaining lane, so that data of the local end and a peer end is smoothly switched during switching between a plurality of lanes.

A quantity of to-be-disabled lanes is the second quantity. Remaining lanes are lanes other than the to-be-disabled lanes among the quantity of lanes currently in the high-speed state in the port transmitter link of the first device, that is, lanes used for data transmission in the high-speed state after lane width adjustment. A quantity of remaining lanes is the first quantity.

That the first device sends, on the to-be-disabled lane, the control frame indicating logical layer electrical idle is specifically: the first device sends, on the second quantity of to-be-disabled lanes, the control frame indicating logical layer electrical idle. The control frame indicating logical layer electrical idle may be LLCF_EI. LLCF_EI is used to mark a transmission end on a lane (lane). Specific content of LLCF_EI is not limited in this embodiment of this application.

The first device sends the pad control frame on the remaining lane, which specifically means that the first device sends the pad control frame on the first quantity of lanes in the high-speed state. The pad control frame may be LLCF_PAD, and LLCF_PADs sent on the lanes have a same length.

After S606 is performed, the first device enables the to-be-disabled lane to enter the state indicated by the low-power gear.

Further, after S605, the method provided in this embodiment of this application may further include: The second device determines the to-be-disabled lane, where the port transmitter link further includes the first quantity of lanes in the high-speed state in addition to the to-be-disabled lane; and the second device enables the to-be-disabled lane to enter the state indicated by the low-power gear.

Specifically, as shown in FIG. 7, the second device determining the to-be-disabled lane may be specifically implemented as S607.

S607: The second device receives a first control frame; and if the first control frame is a logical layer electrical idle control frame, determines that a lane receiving the first control frame is the to-be-disabled lane.

Specifically, when the second device receives, on some lanes, the control frame (for example, LLCF_EI) indicating logical layer electrical idle, the second device may determine that these lanes are to-be-disabled lanes, and the second device enables the to-be-disabled lanes to enter the state indicated by the low-power gear. In a normal case, the second device has a second quantity of lanes for receiving LLCF_EI.

Further, when S607 is performed, or after S607 is performed, as shown in FIG. 7, the method provided in this embodiment of this application may further include S608.

S608: The second device receives a second control frame; and if the second control frame is a pad control frame, determines that a lane receiving the second control frame is in a high-speed state.

The quantity of lanes in the high-speed state is the first quantity. By using a pad control frame, a transmitter side and a receiver side synchronize lanes currently in the high-speed state, so that transmitted data of the two sides can be smoothly switched during switching between a plurality of lanes.

The second device receives a pad control frame on some lanes, and the second device may determine that these lanes are not to-be-disabled lanes and these lanes continue to be in the high-speed state. In a normal case, the second device receives the pad control frame on the first quantity of lanes.

After receiving LLCF_PAD, the second device resets a scrambling seed.

Further, as shown in FIG. 7, the method provided in this embodiment of this application may further include S609 and S610.

S609: The first device sends a data start control frame on the remaining lane.

Remaining lanes are all remaining TX lanes in the high-speed state in the port transmitter link of the first device. A quantity of all the remaining TX lanes in the high-speed state is the first quantity.

The data start control frame may be LLCF_DS. Specific content of LLCF_DS is not limited in this embodiment of this application.

S610: The second device receives a third control frame; and if the third control frame is a data start control frame, determines to send a normal service on a lane receiving the third control frame.

Then, the first device and the second device may send a normal service at a new link width.

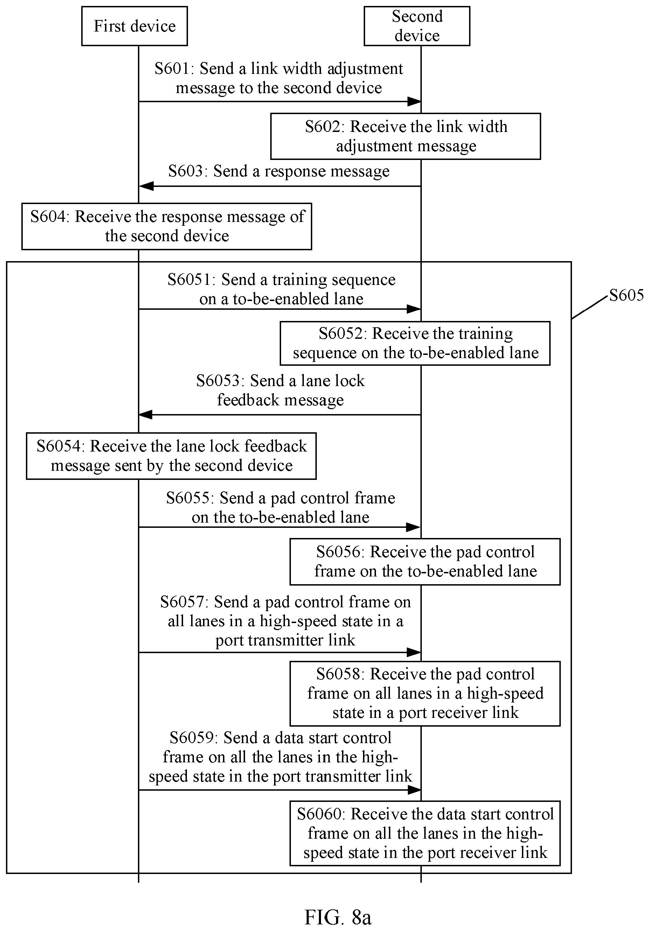

Further, in the scenario of dynamically increasing the quantity of lanes, in S605, the first device sends the training sequence on the to-be-enabled lane, to enable (wake up) the to-be-enabled lane. A specific implementation is shown in FIG. 8a. That the first device sends the training sequence on the to-be-enabled lane may be specifically implemented as S6051 to S6060.

S6051: The first device sends the training sequence on the to-be-enabled lane.

In a possible implementation, the training sequence sent in S6051 is LLCF_TS2. Content of LLCF_TS2 is not limited in this embodiment of this application.

S6052: The second device receives the training sequence on the to-be-enabled lane.

After S6051 and S6052, the first device and the second device start to perform lane training on the to-be-enabled lane. The second device needs to detect whether training on the to-be-enabled lane is completed; and perform S6053 if training is completed. If training on any lane in the to-be-enabled lane fails, the second device feeds back, to the first device, a message indicating that training on some lanes fails, and a link width adjustment process result. The first device and the second device still perform service reception and transmission based on an original quantity of lanes.

S6053: The second device sends a lane lock feedback message.

In a possible implementation, in a scenario of waking up the to-be-enabled lane from LPx, the lane lock feedback message may be a lane lock feedback message (Lane Lock Feedback Message, LLFM), to indicate that all newly added lanes are successfully locked. Content and a format of the LLFM are not limited in this embodiment of this application.

S6054: The first device receives the lane lock feedback message sent by the second device.

S6055: The first device sends a pad control frame on the to-be-enabled lane.

Specifically, the pad control frame may be several LLCF_PADs. The first device sends the pad control frame on the to-be-enabled lane, to align a location of sending a control frame on a newly added lane (the to-be-enabled lane) with a location of sending a control frame on an original lane in the high-speed state.

S6056: The second device receives the pad control frame on the to-be-enabled lane.

The second device receives the pad control frame on the to-be-enabled lane, to align the location of sending the control frame on the newly added lane (the to-be-enabled lane) with the location of sending the control frame on the original lane in the high-speed state.

S6057: The first device sends a pad control frame on all lanes in the high-speed state in the port transmitter link.

Specifically, the pad control frame sent in S6057 may be one LLCF_PAD, and lengths of LLCF_PADs sent on all the lanes in the high-speed state are the same, so that data of the local end and the peer end is smoothly switched during switching between a plurality of lanes.

S6058: The second device receives the pad control frame on all lanes in the high-speed state in the port receiver link.

All the lanes in the high-speed state of the second device receive the pad control frame, so that data of the local end and the peer end is smoothly switched during switching between a plurality of lanes.

After the pad control frame is received, the scrambling seed is reset.

S6059: The first device sends a data start control frame on all lanes in the high-speed state in the port transmitter link.

The data start control frame may be one LLCF_DS. Specific content and a specific format of LLCF_DS are not limited in this embodiment of this application. In all the lanes in the high-speed state, transmission of the data start control frame may be used for multi-lane alignment.

S6060: The second device receives the data start control frame on all the lanes in the high-speed state in the port receiver link.

Then, the first device and the second device may send a normal service at a new link width.

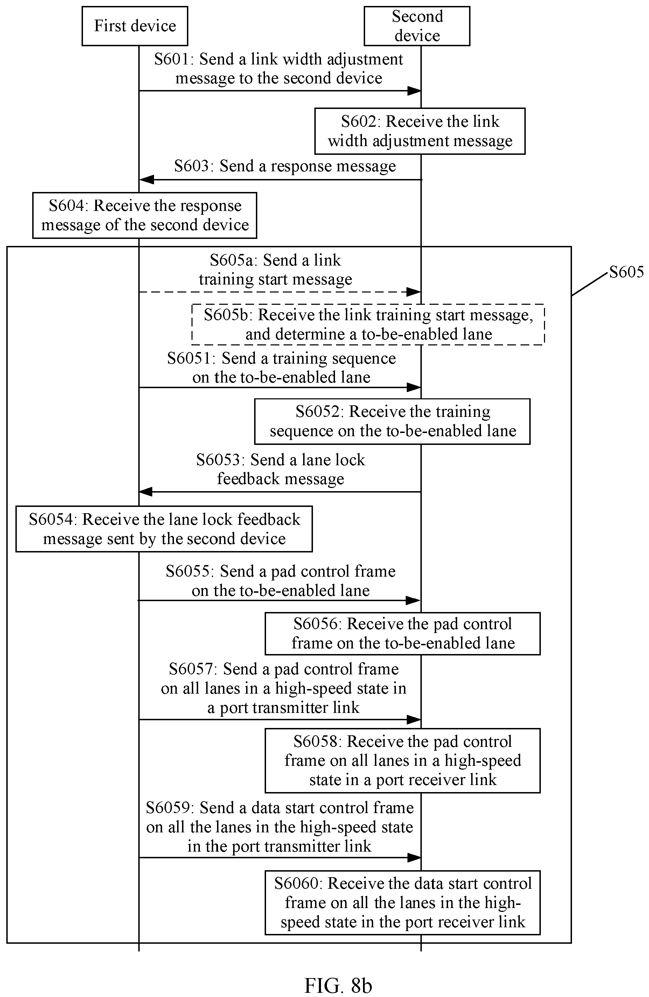

In the scenario of dynamically increasing the quantity of lanes, in S605, the first device sends the training sequence on the to-be-enabled lane, to enable (wake up) the to-be-enabled lane. In a possible implementation, when the to-be-enabled lane is woken up from LP3 or disable, further, as shown in FIG. 8b, before the first device sends the training sequence in S605, the method provided in this embodiment of this application may further include S605a and S605b.

S605a: The first device sends a link training start message.

The link training start message (Training Start Message, TSM) indicates to initiate training for the to-be-enabled lane. The link training start message may be sent through a main link or a sideband link. This is not limited in this embodiment of this application.

S605b: The second device receives the link training start message, and determines the to-be-enabled lane.

Then, the first device and the second device initiate, according to a link training procedure, training for the to-be-enabled lane. This includes lane clock recovery and locking and lane equalization. A process of lane clock recovery and locking and lane equalization is not limited in the present invention. A lane for which lane equalization succeeds is a to-be-enabled lane. Steps S6051 to S6060 are performed.

Specifically, in S605b, the second device may determine that the to-be-enabled lane is a lane for which training indicated by the link training start message is initiated.

Then, a process of steps S6051 to S6060 is performed between the first device and the second device, to recover the to-be-enabled lane to the high-speed state.

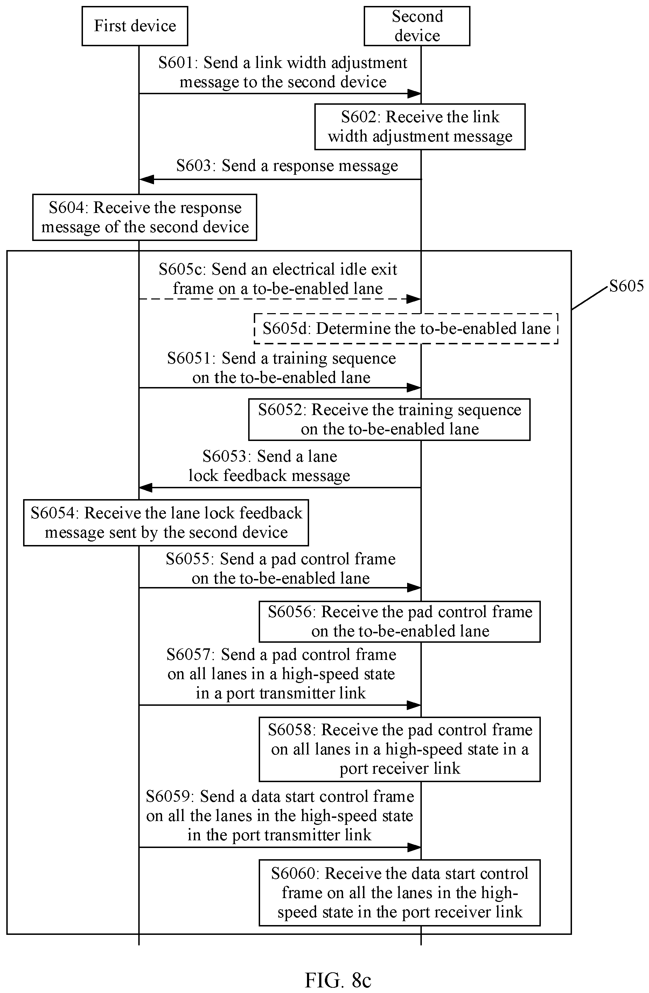

In the scenario of dynamically increasing the quantity of lanes, in S605, the first device sends the training sequence on the to-be-enabled lane, to enable (wake up) the to-be-enabled lane. In a possible implementation, when the to-be-enabled lane is woken up from LPx (the low-power state that may have different gears such as LP0, LP1, and LP2), further, as shown in FIG. 8c, before the first device sends the training sequence in S605, the method provided in this embodiment of this application may further include S605c and S605d.

S605c: The first device sends an electrical idle exit frame on the to-be-enabled lane.

The electrical idle exit frame is used to wake up a lane in the low-power state (LPx state) to enter the high-speed state.

For example, the electrical idle exit frame may be LLCF_EIE. Content and a format of LLCF_EIE are not limited in this embodiment of this application.

S605d: The second device determines the to-be-enabled lane.

The to-be-enabled lane is a lane that is sensed to be non-electrical idle.

Specifically, when the second device senses, on the lane in the low-power state, that the lane is non-electrical idle, the second device determines that the lane is a to-be-enabled lane.

Then, a process of steps S6051 to S6060 is performed between the first device and the second device, to recover the to-be-enabled lane to the high-speed state.

The foregoing embodiment describes a process of adjusting a link width. The following describes an example of content related to the foregoing embodiment, but does not constitute specific limitation.

First, a link width adjustment message is described by using an example.

The link width adjustment message (LWAM) is a set of link width adjustment request parameters including an adjusted link width parameter. In the scenario of reducing the quantity of lanes, the LWAM further includes a low-power gear corresponding to a lane that needs to be disabled after the link width is adjusted.

The LWAM is used when a link is in a service transmission state. The LWAM is initiated when a link bandwidth requirement needs to be adjusted. A width of the port transmitter link is adjusted by negotiating with the peer end. The LWAM needs to be responded. If the receiver side accepts the link width adjustment request, the receiver side needs to respond with ACK to the LWAM. Otherwise, the receiver side needs to respond with NACK. For details about the response, refer to the following description about acknowledgment/negative acknowledgment information.

The LWAM supports transmission through an ML and an SL. An arrangement format of a logical layer main link management packet (Logical Layer Main link Management Packet, LLMMP) corresponding to transmission through the ML may be shown in Table 4. An arrangement format of a logical layer sideband link management packet (Logical Layer Sideband link Management Packet, LLSMP) corresponding to transmission through the SL may be shown in Table 5.

**Table 4**

| Byte | Bit | Field name | Note |
|---|---|---|---|
| 0 | 7:0 | Logical layer packet type (Logical Layer Packet Type, LLPT) | Packet type, configured as 0xF0 |
| 1 | 5:0 | Logical layer management message type (Logical Layer Management Message Type, LLMMT) | Logical layer management message type, configured as 0x22 |
| | 7:6 | Reserved | Reserved field |
| 2 | 3:0 | LW_Req | Link width adjustment request parameters: |
| | | | 01h: Request to adjust a link width to 1 |
| | | | 02h: Request to adjust a link width to 2 |
| | | | 03h: Request to adjust a link width to 3 |
| | | | 04h: Request to adjust a link width to 4 |
| | | | 05h: Request to adjust a link width to 5 |
| | | | 06h: Request to adjust a link width to 6 |
| | | | 07h: Request to adjust a link width to 7 |
| | | | 08h: Request to adjust a link width to 8 |
| | | | Other reserved |
| | 7:4 | LP_MODE | A to-be-disabled lane enters a low-power gear in a scenario of reducing a link width: |
| | | | 00h: The to-be-disabled lane enters LP0 |
| | | | 01h: The to-be-disabled lane enters LP1 |
| | | | 02h: The to-be-disabled lane enters LP2 |
| | | | 03h: The to-be-disabled lane enters LP3 |
| | | | 20h: The to-be-disabled lane enters disable |
| | | | Other reserved |
| | | | This field is null in a scenario of increasing a link width |
| 3-5 | 7:0 | Reserved | Reserved field |
| 6-7 | 7:0 | CRC | Check field, to check bytes 1 to 5 |

**Table 5**

| Byte | Bit | Field name | Note |
|---|---|---|---|
| 0 | 5:0 | LLMMT | Logical layer management message type, configured as 0x22 |
| | 7:6 | Reserved | Reserved field |
| 1 | 7:0 | LLPL | Packet payload length parameter, equal to 1 |
| 2 | 3:0 | LW_Req | Link width adjustment request parameters: |
| | | | 01h: Request to adjust a link width to 1 |
| | | | 02h: Request to adjust a link width to 2 |
| | | | 03h: Request to adjust a link width to 3 |
| | | | 04h: Request to adjust a link width to 4 |
| | | | 05h: Request to adjust a link width to 5 |
| | | | 06h: Request to adjust a link width to 6 |
| | | | 07h: Request to adjust a link width to 7 |
| | | | 08h: Request to adjust a link width to 8 |
| | | | Other reserved |
| | 7:4 | LP_MODE | A to-be-disabled lane enters a low-power gear in a scenario of reducing a link width: |
| | | | 00h: The to-be-disabled lane enters LP0 |
| | | | 01h: The to-be-disabled lane enters LP1 |
| | | | 02h: The to-be-disabled lane enters LP2 |
| | | | 03h: The to-be-disabled lane enters LP3 |
| | | | 20h: The to-be-disabled lane enters disable |
| | | | Other reserved |
| | | | This field is null in a scenario of increasing a link width |
| 3-4 | 7:0 | CRC | Check field, to check bytes 0 to 2 |

The following describes the acknowledgment/negative acknowledgment information by using an example.

Acknowledgment/Negative acknowledgment information (ACK/NACK Message, ACK/NACK) is a set of responses to management messages. ACK/NACK is used when a management message needs to be responded. ACK/NACK is used to respond to received information and feed back a response or a decision result of a current port for the corresponding information. ACK/NACK does not need to be responded.

ACK/NACK supports transmission through an ML and an SL. An LLMMP arrangement format corresponding to transmission through an ML is shown in Table 6. An LLSMP arrangement format corresponding to transmission through an SL is shown in Table 7.

**Table 6**

| Byte | Bit | Field name | Note |
|---|---|---|---|
| 0 | 7:0 | LLPT | Packet type, configured as 0xF0 |
| 1 | 5:0 | LLMMT | Logical layer management message type, configured as 0x2A |
| | 7:6 | Reserved | Reserved field |
| 2 | 7:0 | ACK/NACK | Acknowledgment/Negative acknowledgment message: |
| | | | 0Fh: ACK |
| | | | F0h: NACK |
| 3 | 5:0 | LLMMT_Ack/Nack | Response type, indicating a specific type of management message to be responded |
| | 7:6 | Reserved | Reserved field |
| 4-5 | 7:0 | Reserved | Reserved field |
| 6-7 | 7:0 | CRC | Check field, to check bytes 1 to 5 |

**Table 7**

| Byte | Bit | Field name | Note |
|---|---|---|---|
| 0 | 5:0 | LLMMT | Logical layer management message type, configured as 0x2A |
| | 7:6 | Reserved | Reserved field |
| 1 | 7:0 | LLPL | Packet payload length parameter, equal to 1 |
| 2 | 7:0 | ACK/NACK | Acknowledgment/Negative acknowledgment message: |
| | | | 0Fh: ACK |
| | | | F0h: NACK |
| 3 | 5:0 | LLMMT_Ack/Nack | Response type, indicating a specific type of management message to be responded |
| | 7:6 | Reserved | Reserved field |
| 4-5 | 7:0 | CRC | Check field, to check bytes 0 to 3 |

The following describes an example of a process of dynamically adjusting the link width.

Dynamically adjusting the link width is a process of dynamically switching a lane state. Dynamically switching the lane state is mainly used in a scenario in which a high-speed data service is not interrupted. Before and after dynamically switching the lane state, at least one lane needs to be in the high-speed service transmission state.

Dynamically switching the lane state includes the following operations:
Operation 1: Dynamically add a quantity of lanes. When a current port has at least one TX lane for service transmission, 1 to 7 TX lanes are dynamically added, and the lanes are at most increased to 8 TX lanes.
Operation 2: Dynamically reduce a quantity of lanes. When a current port has at least two TX lanes for service transmission, 1 to 7 TX lanes are dynamically reduced, and the lanes are at most reduced to 1 TX lane.

To facilitate link management, it is prohibited to repeatedly initiate a dynamic lane state switching process when a link is in an initial link training process, a link recovery process, a link low-power lane state switching process, or another dynamic lane state switching process.

To implement link bandwidth management more conveniently and flexibly, a dynamic link width switching operation is initiated by a TX side of a port. In other words, a specific port can only actively manage a width of a local TX link.

To simplify the lane state switching process, complex lane state switching needs to be simplified as a plurality of atomic link operations of lane width switching. In addition, to use the main link as much as possible for handshake information exchange to facilitate more quickly execution of the lane state switching process, it is recommended that a port has both high-speed available TX and RX lanes in an intermediate state of switching in a switching process.

The following describes an example of the scenario of dynamically reducing the quantity of lanes in the process of dynamically adjusting the link width.

After link training is completed, lane state machines LNSMs of all valid transmitter lanes are in an HS (high-speed) state. When an input bandwidth of the port decreases, an upper layer may control some lanes to enter low-power LP0-LP2 states or a disable state, to reduce a link bandwidth of a transport layer.

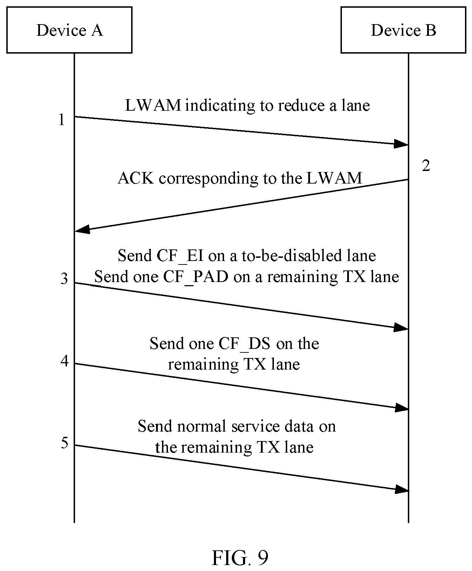

The process of dynamically reducing the quantity of lanes may be shown in FIG. 9 and include:
1. A port of a device A sends one LWAM to a device B through a high-speed link, to notify the peer device B of an adjusted link width value and a low-power state that a to-be-disabled lane is to enter.
2. After receiving the LWAM, RX of a port of the device B sends ACK/NACK corresponding to the LWAM.

If a port corresponding to the device B supports dynamic switching a link width, the device B feeds back NACK; or otherwise, the device B feeds back ACK.

If the device B feeds back the NACK message, the process ends. The device A and the device B perform service reception and transmission based on an original quantity of lanes.

3. After the port of the device A receives the ACK corresponding to the LWAM, the device A sends four LLCF_EIs on a to-be-disabled lane, and then the lane enters a low-power state. One LLCF_PAD is simultaneously sent on all remaining TX lanes in a high-speed state (lengths of PADs sent on all the TX lanes are all cf_pad_length), so that data of a local end and a peer end is smoothly switched during switching between a plurality of lanes.

The to-be-disabled lane is a lane that needs to be disabled and that is determined by the device A based on the adjusted link width value.

Note: After LLCF_PAD is received on an RX lane of the device B, a scrambling seed needs to be reset.

4. The port of the device A sends one LLCF_DS on all the remaining TX lanes in the high-speed state.

Accordingly, LLCF_DS is received on all RX lanes of the port of the device B in the high-speed state.

5. The port of the device A sends a normal service at a new link width.

The following describes an example of the scenario of dynamically increasing the quantity of lanes in the process of dynamically adjusting the link width.

After a bandwidth increases, a lane in a low-power state or a disable state can be controlled by an upper layer to be quickly switched back to an HS state, to quickly recover a link bandwidth of a transport layer.

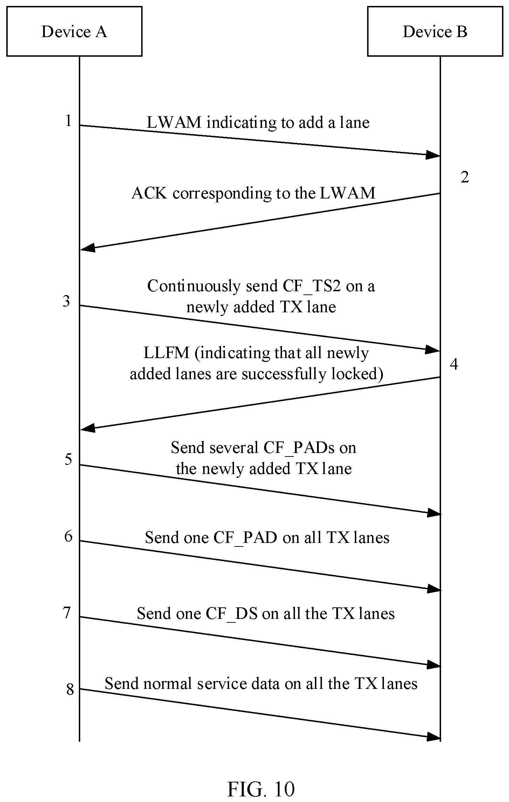

The process of dynamically increasing the quantity of lanes may be shown in FIG. 10 and include:
1. A port of a device A sends one LWAM to a device B through a high-speed link, to notify the peer device B of an adjusted link width value.
2. After receiving the LWAM, RX of a port of the device B sends ACK/NACK corresponding to the LWAM.

If a port corresponding to the device B supports dynamic switching a link width, the device B feeds back NACK; or otherwise, the device B feeds back ACK.

If the device B feeds back the NACK message, the process ends. The device A and the device B perform service reception and transmission based on an original quantity of lanes.

3. After a port of the device A receives the ACK corresponding to the LWAM, the port of the device A continuously sends LLCF_TS2 on a newly added TX lane, and normally sends services on other TX lanes.

The newly added TX lane is a lane that needs to be enabled and that is determined by the device A based on the adjusted link width value.

Note: In this example, the newly added TX lane of the port A is woken up from LPx. This is fast wakeup. In this case, LLCF_TS2 is sent. If the newly added TX lane of the port A is woken up from disable, LLCF_TS0, LLCF_TS1, and LLCF_S2 need to be sent on the newly added lane for lane training. In addition, the device A also needs to send a TSM to indicate to start initial training for a corresponding lane.

4. After detecting that training for all RX lanes that need to be newly added is completed, a port of the device B sends an LLFM to indicate that all the newly added lanes are successfully locked.

Note 1: In this example, the newly added TX lane of the port A is woken up from LPx. If the newly added TX lane of the port A is woken up from disable, this needs to wait for the newly added lane to complete an initial training process (that is, in this process, a feedback message of the device B may include a CLFM, an EQFM, and an LLFM).

Note 2: If training for any newly added lane fails, after the device B feeds back a CLFM, an EQFM, or an LLFM indicating that training for some lanes fail, the process ends. The device A and the device B perform service reception and transmission based on an original quantity of lanes.

5. After the device A receives the LLFM indicating that all the newly added lanes are successfully locked, the device A sends several LLCF_PADs on the newly added TX lanes, to align a location of sending a CF on the newly added lane with a location of sending a CF on an original lane in a high-speed state.

6. Then, the device A simultaneously sends one LLCF_PAD on all remaining TX lanes in a high-speed state (lengths of PADs sent on all the TX lanes are all cf_pad_length), so that data of a local end and a peer end is smoothly switched during switching between a plurality of lanes.

Note: After LLCF_PAD is received on an RX lane of the device B, a scrambling seed needs to be reset.

7. The device A simultaneously sends one LLCF_DS on all the TX lanes in the high-speed state.

8. The port of the device A sends a normal service at a new link width.

The foregoing mainly describes the solutions provided in embodiments of the present invention from a perspective of a working principle of a device. It may be understood that, to implement the foregoing functions, the compute device or the like includes corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

In embodiments of the present invention, the compute device or the like may be divided into functional modules based on the foregoing method example. For example, the functional modules corresponding to the corresponding functions may be obtained through division, or two or more functions may be integrated into one processing module. The integrated module may be implemented in a form of hardware, or may be implemented in a form of a software functional module. It should be noted that in embodiments of the present invention, division into modules is an example, and is merely a logical function division. During actual implementation, another division manner may be used.

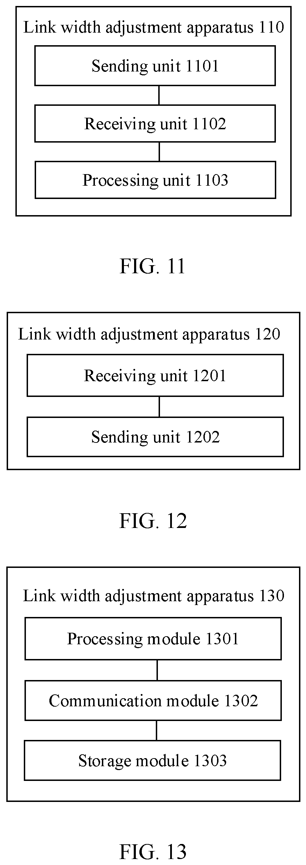

When each functional module is obtained through division based on each corresponding function, FIG. 11 shows an apparatus 110 for adjusting a link width according to an embodiment of this application. The apparatus 110 for adjusting a link width is configured to implement functions of a first device or a device A in the foregoing method embodiment. As shown in FIG. 11, the apparatus 110 for adjusting a link width may include a sending unit 1101, a receiving unit 1102, and a processing unit 1103. The sending unit 1101 is configured to perform the process S601 in FIG. 6, FIG. 7, FIG. 8a, FIG. 8b, or FIG. 8c. The receiving unit 1102 is configured to perform the process S604 in FIG. 6, FIG. 7, FIG. 8a, FIG. 8b, or FIG. 8c. The processing unit 1103 is configured to perform the process S605 in FIG. 6, FIG. 7, FIG. 8a, FIG. 8b, or FIG. 8c. All related content of the steps in the foregoing method embodiments may be cited in function descriptions of the corresponding functional modules. Details are not described herein again.

When each functional module is obtained through division based on each corresponding function, FIG. 12 shows another apparatus 120 for adjusting a link width according to an embodiment of this application. The apparatus 120 for adjusting a link width is configured to implement functions of a second device or a device B in the foregoing method embodiment. As shown in FIG. 12, the link width adjustment apparatus 120 may include: a receiving unit 1201 and a sending unit 1202. The receiving unit 1201 is configured to perform the process S602 in FIG. 6, FIG. 7, FIG. 8a, FIG. 8b, or FIG. 8c. The sending unit 1202 is configured to perform the process S603 in FIG. 6, FIG. 7, FIG. 8a, FIG. 8b, or FIG. 8c. All related content of the steps in the foregoing method embodiments may be cited in function descriptions of the corresponding functional modules. Details are not described herein again.

When an integrated unit is used, FIG. 13 shows still another link width adjustment apparatus 130 according to an embodiment of this application. The apparatus 130 is configured to implement functions of the first device, the device A, the second device, or the device B in the foregoing embodiment. The link width adjustment apparatus 130 includes a processing module 1301 and a communication module 1302. The processing module 1301 is configured to control and manage an action of the link width adjustment apparatus 130. The communication module 1302 is configured to communicate with another device. For example, the processing module 1301 is configured to perform any process of S601 to S605 in FIG. 6, and the communication module 1302 is configured to perform interaction between another device and the link width adjustment apparatus 130. The link width adjustment apparatus 130 may further include a storage module 1303, configured to store program code and data of the link width adjustment apparatus 130.

The processing module 1301 may be the processor 5010 in the physical structure of the compute device 50 shown in FIG. 5, or may be a processor or a controller. For example, the processing module 1301 may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. Alternatively, the processing module 1301 may be a combination for implementing computing functions, such as a combination of one or more microprocessors, a combination of a DSP and a microprocessor, or the like. The communication module 1302 may be the communication interface 5040 in the physical structure of the compute device 50 shown in FIG. 5. The communication module 1302 may be a communication port, or may be a transceiver, a transceiver circuit, a communication interface, or the like. Alternatively, the communication interface may communicate with another device through the foregoing element that has receiving and sending functions. The foregoing element that has receiving and sending functions may be implemented through an antenna and/or a radio frequency apparatus. The storage module 1303 may be the memory 5030 in the physical structure of the compute device 50 shown in FIG. 5.

As described above, the link width adjustment apparatus 110, the link width adjustment apparatus 120, and the link width adjustment apparatus 130 provided in embodiments of this application may be configured to implement functions of the first device, the device A, the second device, or the device B in the foregoing embodiments of this application. For ease of description, only parts related to embodiments of this application are shown. For specific technical details that are not disclosed, refer to embodiments of this application.

According to still another aspect, an embodiment of this application provides a data transmission system, including the link width adjustment apparatus 110 and the link width adjustment apparatus 120.

In another form of this embodiment, a computer-readable storage medium is provided. The computer-readable storage medium stores instructions. When the instructions are executed, the link width adjustment method in the foregoing method embodiment is performed.

In another form of this embodiment, a computer program product including instructions is provided. When the computer program product runs on a computer, the computer is enabled to perform the link width adjustment method in the foregoing method embodiment.

In another form of this embodiment, a chip is provided, including one or more interface circuits and one or more processors. The interface circuit is configured to: receive a signal from a memory of an electronic device, and send the received signal to the processor. The signal includes computer instructions stored in the memory. When the processor executes the computer instructions, the electronic device is enabled to perform operation steps in the method according to the first aspect or any possible implementation.

An embodiment of this application further provides a chip system. The chip system includes a processor, configured to implement the technical method in the embodiments of the present invention. In a possible design, the chip system further includes a memory, configured to store a necessary program instruction and/or data in this embodiment of the present invention. In a possible design, the chip system further includes a memory, configured to be used by the processor to invoke application program code stored in the memory. The chip system may include one or more chips, or may include a chip and another discrete component. This is not specifically limited in this embodiment of this application.

A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

All or a part of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, the procedures or functions according to embodiments of the present invention or this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be an SSD.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A link width adjustment method, performed by a first device or a chip in a first device, wherein the method comprises:
sending a link width adjustment message to a second device, wherein the link width adjustment message comprises a link width request parameter;
receiving a response message of the second device; and
adjusting, based on the response message, a width of a port transmitter link of the first device to a width indicated by the link width request parameter.

2. The method according to claim 1, wherein the link width request parameter indicates a first quantity, and the link width adjustment message further comprises a low-power gear; and
adjusting the width of the port transmitter link of the first device to the width indicated by the link width request parameter comprises:
determining a to-be-disabled lane, wherein the port transmitter link further comprises a first quantity of lanes in a high-speed state in addition to the to-be-disabled lane; and
entering, by the to-be-disabled lane, a state indicated by the low-power gear.

3. The method according to claim 2, wherein before entering, by the to-be-disabled lane, the state indicated by the low-power gear, the method further comprises:
sending, on the to-be-disabled lane, a control frame indicating logical layer electrical idle.

4. The method according to claim 2 or 3, wherein the method further comprises:
sending a pad control frame on the first quantity of lanes in the high-speed state.

5. The method according to claim 1, wherein the link width request parameter indicates a third quantity; and
adjusting the width of the port transmitter link of the first device to the width indicated by the link width request parameter comprises:
determining a to-be-enabled lane, wherein the third quantity is a sum of a quantity of lanes currently in a high-speed state in the port transmitter link and a quantity of to-be-enabled lanes; and
sending a training sequence on the to-be-enabled lane.

6. The method according to claim 5, wherein sending the training sequence on the to-be-enabled lane comprises:
sending a training sequence on the to-be-enabled lane; and
receiving a lane lock feedback message sent by the second device.

7. The method according to claim 5 or 6, wherein before sending the training sequence on the to-be-enabled lane, the method further comprises:
sending a link training start message, wherein the link training start message indicates to initiate training for the to-be-enabled lane; and
sending an electrical idle exit frame on the to-be-enabled lane.

8. A link width adjustment method, applied to and performed by a second device or a chip in a second device, wherein the method comprises:
receiving a link width adjustment message, wherein the link width adjustment message comprises a link width request parameter; and
when dynamic link width switching is supported, sending a response message, wherein the response message is used to confirm that a width of a port receiver link of the second device is adjusted to a width indicated by the link width request parameter.

9. The method according to claim 8, wherein the link width request parameter indicates a first quantity, the link width adjustment message further comprises a low-power gear, and the method further comprises:
determining a to-be-disabled lane, wherein the port transmitter link further comprises a first quantity of lanes in a high-speed state in addition to the to-be-disabled lane; and
entering, by the to-be-disabled lane, a state indicated by the low-power gear.

10. The method according to claim 9, wherein determining the to-be-disabled lane comprises:
receiving a first control frame; and
if the first control frame is a logical layer electrical idle control frame, determining that a lane receiving the first control frame is the to-be-disabled lane.

11. The method according to claim 9 or 10, wherein the method further comprises:
receiving a second control frame; and
if the second control frame is a pad control frame, determining that a lane receiving the second control frame is in a high-speed state, wherein a quantity of lanes in the high-speed state is the first quantity.

12. The method according to claim 8, wherein the link width request parameter indicates a third quantity, and the method further comprises:
receiving a training sequence on a to-be-enabled lane.

13. The method according to claim 12, wherein before receiving the training sequence on the to-be-enabled lane, the method further comprises:
determining the to-be-enabled lane, wherein the to-be-enabled lane is a lane that is sensed to be non-electrical idle, or a lane for which training indicated by the link training start message is initiated.

14. The method according to claim 12 or 13, wherein receiving the training sequence on the to-be-enabled lane further comprises:
sending a lane lock feedback message to a first device.

15. A link width adjustment apparatus, deployed in a first device or a chip in the first device, wherein the apparatus comprises:
a sending unit, configured to send a link width adjustment message to a second device, wherein the link width adjustment message comprises a link width request parameter;
a receiving unit, configured to receive a response message of the second device; and
an adjustment unit, configured to adjust, based on the response message, a width of a port transmitter link of the first device to a width indicated by the link width request parameter.

16. The apparatus according to claim 15, wherein the link width request parameter indicates a first quantity, and the link width adjustment message further comprises a low-power gear; and
the processing unit is specifically configured to:
determine a to-be-disabled lane, wherein the port transmitter link further comprises a first quantity of lanes in a high-speed state in addition to the to-be-disabled lane; and
enter, by the to-be-disabled lane, a state indicated by the low-power gear.

17. The apparatus according to claim 16, wherein before the to-be-disabled lane enters the state indicated by the low-power gear, the sending unit is further configured to:
send, on the to-be-disabled lane, a control frame indicating logical layer electrical idle.

18. The apparatus according to claim 16 or 17, wherein the sending unit is further configured to:
send a pad control frame on the first quantity of lanes in the high-speed state.

19. The apparatus according to claim 15, wherein the link width request parameter indicates a third quantity; and
the processing unit is specifically configured to:
determine a to-be-enabled lane, wherein the third quantity is a sum of a quantity of lanes currently in a high-speed state in the port transmitter link and a quantity of to-be-enabled lanes; and
send a training sequence on the to-be-enabled lane.

20. The apparatus according to claim 19, wherein the sending unit is specifically configured to:
send a training sequence on the to-be-enabled lane; and
receive a lane lock feedback message sent by the second device.

21. The apparatus according to claim 19 or 20, wherein before sending the training sequence on the to-be-enabled lane, the sending unit is further configured to:
send a link training start message, wherein the link training start message indicates to initiate training for the to-be-enabled lane; and
send an electrical idle exit frame on the to-be-enabled lane.

22. A link width adjustment apparatus, applied to a second device or a chip in a second device, wherein the apparatus comprises:
a receiving unit, configured to receive a link width adjustment message, wherein the link width adjustment message comprises a link width request parameter; and
a sending unit, configured to: when dynamic link width switching is supported, send a response message, wherein the response message is used to confirm that a width of a port receiver link of the second device is adjusted to a width indicated by the link width request parameter.

23. The apparatus according to claim 22, wherein the link width request parameter indicates a first quantity, the link width adjustment message further comprises a low-power gear, the apparatus further comprises a processing unit, and the processing unit is configured to:
determine a to-be-disabled lane, wherein the port receiver link further comprises a first quantity of lanes in a high-speed state in addition to the to-be-disabled lane; and
enter, by the to-be-disabled lane, a state indicated by the low-power gear.

24. The apparatus according to claim 23, wherein
the receiving unit is further configured to receive a first control frame; and
the processing unit is further configured to: if the first control frame is a logical layer electrical idle control frame, determine that a lane receiving the first control frame is the to-be-disabled lane.

25. The apparatus according to claim 23 or 24, wherein
the receiving unit is further configured to receive a second control frame; and
the processing unit is further configured to: if the second control frame is a pad control frame, determine that a lane receiving the second control frame is in a high-speed state, wherein a quantity of lanes in the high-speed state is the first quantity.

26. The apparatus according to claim 22, wherein the link width request parameter indicates a third quantity; and the receiving unit is further configured to receive a training sequence on a to-be-enabled lane.

27. The apparatus according to claim 26, wherein the processing unit is further configured to:
determine the to-be-enabled lane, wherein the to-be-enabled lane is a lane that is sensed to be non-electrical idle, or a lane for which training indicated by the link training start message is initiated.

28. The apparatus according to claim 26 or 27, wherein the sending unit is specifically configured to:
send a lane lock feedback message to a first device.

29. A compute device, wherein the compute device comprises a memory and at least one processor, the memory is configured to store a group of computer instructions, and when the processor executes the group of computer instructions, operation steps in the method according to any one of claims 1 to 14 are performed.

30. A chip, comprising one or more interface circuits and one or more processors, wherein the interface circuit is configured to receive a signal from a memory of an electronic device, and send the signal to the processor, the signal comprises computer instructions stored in the memory, and when the processor executes the computer instructions, the electronic device is enabled to perform operations in the method according to any one of claims 1 to 14.

31. A data transmission system, wherein the data transmission system comprises a data sending apparatus and a data receiving apparatus, the data sending apparatus comprises the link width adjustment apparatus according to any one of claims 15 to 21, and the data receiving apparatus comprises the link width adjustment apparatus according to any one of claims 22 to 28.

32. A computer-readable storage medium, comprising computer software instructions, wherein when the computer software instructions are run on a computer, the computer is enabled to perform operation steps in the method according to any one of claims 1 to 14.

33. A computer program product, wherein the computer program product comprises a software program, and when the software program is executed by a computer or a processor, the computer or the processor is enabled to perform operation steps in the method according to any one of claims 1 to 14.
